# EUROPÄISCHE PATENTANMELDUNG

(11) **EP 2 246 720 A1**
(43) Veröffentlichungstag der Anmeldung: **03.11.2010**
(21) Anmeldenummer: 10158145.2
(22) Anmeldetag: 29.03.2010
(51) Int. Cl.: G02B 7/00

(54) **Justierbarer Optikträger**

(30) Priorität: 30.04.2009 DE 102009002779
(71) Anmelder: HILTI Aktiengesellschaft, 9494 Schaan (LI)
(72) Erfinder: Steffen, Roman, 9445, Rebstein (CH); Oehy, Thomas, 9444, Diepoldsau (CH); Nuesch, Hanspeter, 9492, Eschen (CH)

(57) **Zusammenfassung**

Optikträger (1) mit zumindest zwei, je ein optisches Bauelement (4, 5) fixierenden Teilträgern (2, 3), die über zumindest zwei flächig beabstandete Verbindungsglieder (6-8) miteinander verbunden sind, wobei die Verbindungsglieder (6-8) in einer axialen Richtung (12) versetzbar in passend zugeordneten Verbindungsöffnungen (9-11) über Kontaktflächen reibkraftschlüssig verbunden sind, wobei die Verbindungsglieder (6-8) und/oder die Verbindungsöffnungen (9-11) in der Kontaktfläche mindestens eine Aussparung (22, 23a-23d) aufweisen.

## Beschreibung

Die vorliegende Erfindung betrifft einen Optikträger mit zumindest zwei, je ein optisches Bauelement fixierenden Teilträgern, die über zumindest zwei flächig beabstandete Verbindungsglieder miteinander verbunden sind, wobei die Verbindungsglieder in einer axialen Richtung versetzbar in passend zugeordneten Verbindungsöffnungen über Kontaktflächen reibkraftschlüssig verbunden sind.

Laserdioden benötigen zur Parallelisierung des austretenden Laserstrahls eine Kollimatoroptik, die zur Laserdiode justiert werden muss. Beim Aufbau werden zunächst die Laserdiode und die Kollimatoroptik in eine Optikhalterung, im Folgenden als Teilträger bezeichnet, montiert und anschließend wird die gegenseitige Lage der Laserdiode und der Kollimatoroptik justiert.

Nach der DE 10 2006 000 343 B3 weist eine optische Baugruppe einen bezüglich einer Achse justierbaren Optikträger auf, mit dem zwei optische Bauelemente, bspw. Laserdiode und Kollimatoroptik, fest verbunden sind. Der Optikträger besteht aus zumindest zwei, je ein optisches Bauelement fixierenden Teilträger. Die beiden Teilträger sind über zumindest drei flächig beabstandete, axial längliche, biegeschlaffe Verbindungsglieder miteinander verbunden, wobei die Verbindungsglieder axial versetzbar in passend zugeordneten Verbindungsöffnungen reibkraftschlüssig fixiert sind. Die Verbindungsglieder und die zugeordnet passend ausgebildeten Verbindungsöffnungen sind an den axialen Stirnflächen der Teilträger angeordnet und bevorzugt konisch oder zylindrisch ausgebildet.

Die bekannte optische Baugruppe hat den Nachteil, dass die Verbindungsglieder und die Verbindungsöffnungen sehr präzise hergestellt werden müssen, um die beiden Teilträger zu verbinden. Dadurch, dass die Verbindungsglieder vollflächig in den Verbindungsöffnungen anliegen, entstehen hohe Flächenpresskräfte, die den Stick-Slip-Effekt hervorrufen. Als Stick-Slip-Effekt wird das Ruckgleiten von gegeneinander bewegten Festkörpern bezeichnet, er führt zu einer raschen Folge von Haften, Verspannen, Trennen und Abgleiten.

Der Stick-Slip-Effekt führt bei der Montage und Ausrichtung der optischen Baugruppe zu Problemen. Um das erste und zweite optische Bauelement zu fixieren, werden die Verbindungsglieder des ersten Teilträgers in die zugeordneten Verbindungsöffnungen des zweiten Teilträgers eingepasst. Durch Einwirken einer definierten Kraft im Bereich eines Verbindungsgliedes sollen das erste und zweite optische Bauelement genau zueinander justiert werden. Der Stick-Slip-Effekt führt dazu, dass das Verbindungsglied sich trotz der Krafteinwirkung zunächst nicht bewegt und an der Verbindungsöffnung haftet. Wird die Kraft erhöht, löst sich das Verbindungsglied von der Verbindungsöffnung und wird über die gewünschte Position hinaus in der Verbindungsöffnung bewegt. Da nicht in umgekehrter Richtung eine Kraft auf den Teilträger einwirken kann, ist die Positionsänderung des Verbindungsgliedes irreversibel. Zum Teil kann der Fehler dadurch kompensiert werden, dass die weiteren Verbindungsglieder durch Krafteinwirkung um die gleiche Wegstrecke in den zugeordneten Verbindungsöffnungen bewegt werden. Wenn die Positionsänderung des Verbindungsgliedes allerdings zu groß ist oder bei einem der weiteren Verbindungsglieder ebenfalls der Stick-Slip-Effekt auftritt, ist der Optikträger ruiniert.

Die Aufgabe der vorliegenden Erfindung besteht demgegenüber darin, den bekannte Optikträger dahin gehend weiterzuentwickeln, dass die Verbindungsglieder und die zugeordneten Verbindungsöffnungen auf einfachere Art und Weise miteinander verpresst werden.

Diese Aufgabe wird bei dem eingangs genannten Optikträger erfindungsgemäß dadurch gelöst, dass die Verbindungsglieder und/oder die Verbindungsöffnungen in einer Kontaktfläche mindestens eine Aussparung aufweisen. Durch die mindestens eine Aussparung werden die Kontaktfläche und damit die auftretende Flächenpressung zwischen dem Verbindungsglied und der zugeordneten Verbindungsöffnung reduziert.

In einer bevorzugten Ausführungsform ist die mindestens eine Aussparung als ein in axialer Richtung verlaufender Schlitz ausgebildet. Besonders bevorzugt erstreckt sich der mindestens eine in axialer Richtung verlaufende Schlitz über die gesamte Höhe des Verbindungsgliedes und/oder der Verbindungsöffnung in axialer Richtung.

In einer weiteren bevorzugten Ausführungsform weisen die Verbindungsglieder und/oder die zugeordneten Verbindungsöffnungen mindestens zwei symmetrisch über den Umfang der Kontaktfläche verteilte, in axialer Richtung verlaufende Schlitze auf. Eine symmetrische Anordnung der Axialschlitze bietet den Vorteil, dass die Kraft gleichmäßig übertragen wird und die Spannungsverteilung konstant ist.

Besonders bevorzugt weisen die Verbindungsglieder und/oder die zugeordneten Verbindungsöffnungen bei einer rechteckigen Querschnittsfläche eine gerade Anzahl von Aussparungen auf, die symmetrisch über den Umfang der Kontaktfläche verteilt sind.

In einer weiteren bevorzugten Ausführungsform verläuft die mindestens eine Aussparung entlang einer Schraubenlinie oder ist als ein in einer radialen Richtung verlaufender Schlitz ausgebildet.

Besonders bevorzugt sind der Teilträger und die Verbindungsglieder einteilig ausgebildet. Die einteilige Ausführung des Teilträgers und der Verbindungsglieder hat den Vorteil, dass an den Kontaktflächen keine Temperatureffekte auftreten.

In einer bevorzugten Ausführung weisen die Verbindungsglieder an einem dem Teilträger abgewandten Ende einen Übergangsbereich auf. In einer weiteren bevorzugten Ausführung weisen die Verbindungsöffnungen einen ersten Übergangsbereich und/oder einen zweiten Übergangsbereich auf.

Weitere Vorteile und vorteilhafte Ausgestaltungen des Gegenstands der Erfindung sind der Beschreibung, der Zeichnung und den Ansprüchen entnehmbar. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: einen erfindungsgemäßen Optikträger mit einem ersten und zweiten Teilträ- ger, die über drei Verbindungsglieder und drei zugeordnete Verbindungsöff- nungen verbunden sind;
- Fig. 2: ein zylinderförmiges Verbindungsglied und eine zugeordnete zylinderförmige Verbindungsöffnung des ersten und zweiten Teilträgers von Fig. 1 im justier- ten Zustand, wobei die Verbindungsöffnung als Stufenbohrung mit einem ers- ten und zweiten Zylinderabschnitt ausgebildet ist;
- Fig. 3: ein zylinderförmiges Verbindungsglied mit vier symmetrisch angeordneten Aussparungen in axialer Richtung und eine zylinderförmige Verbindungsöff- nung im justierten Zustand;
- Fign. 4a,b: ein zylinderförmiges Verbindungsglied mit einer schraubenförmigen Ausspa- rung (Fig. 4a) und eine zylinderförmige Verbindungsöffnung (Fig. 4b) im nicht- justierten Zustand; und
- Fign. 5a,b: ein quadratisches Verbindungsglied mit vier axialen Aussparungen in einem Querschnitt senkrecht zur axialen Richtung, wobei die Aussparungen in der Mitte der Quadratseiten (Fig. 5a) und in den Quadratecken (Fig. 5b) angeordnet sind.

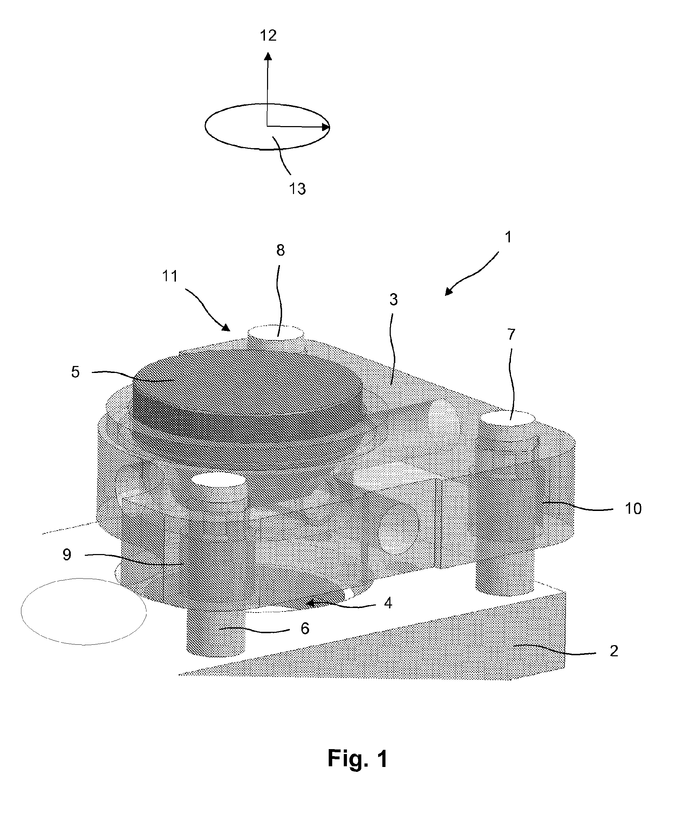

**Fig. 1** zeigt einen erfindungsgemäßen Optikträger **1** mit einem ersten und zweiten Teilträger **2, 3,** die jeweils ein optisches Bauelement **4, 5** fixieren. Der erste Teilträger 2 weist drei flächig beabstandete Verbindungsglieder **6, 7, 8** auf und der zweite Teilträger 3 drei den Verbindungsgliedern 6-8 zugeordnete Verbindungsöffnungen **9, 10, 11.** Um das erste und zweite optische Bauelement 4, 5 zu einander zu justieren und den justierten Zustand zu fixieren, werden die Verbindungsglieder 6-8 des ersten Teilträgers 2 in die zugeordneten Verbindungsöffnungen 9-11 des zweiten Teilträgers 3 eingepasst. Die Fixierung erfolgt durch Reibkraftschluss zwischen Kontaktflächen der Verbindungsglieder 6-8 und Kontaktflächen der Verbindungsöffnungen 9-11. Als Kontaktflächen sind die Bereiche der Verbindungsglieder und der zugeordneten Verbindungsöffnungen definiert, die durch Reibkraftschluss in Kontakt stehen. Als justierter Zustand wird der Zustand bezeichnet, in dem die Verbindungsglieder in die Verbindungsöffnungen eingepasst sind.

Die Verbindungsglieder 6-8 bestehen aus einem biegeschlaffen Material. An einem unteren Ende sind die Verbindungsglieder 6-8 mit dem ersten Teilträger 2 verbunden. Der erste Teilträger 2 und die Verbindungsglieder 6-8 sind in der Ausführung von Fig. 1 einteilig ausgebildet. Alternativ können der erste Teilträger 2 und die Verbindungsglieder 6-8 mehrteilig ausgebildet sein. Die einteilige Ausführung hat gegenüber der mehrteiligen Ausführung den Vorteil, dass das Bauteil in einer Aufspannung gefertigt werden kann (notwendig um die geforderte Positionsgenauigkeit einzuhalten) und dass keine Temperatureffekte an den Kontaktflächen der gefügten Teile auftreten.

In der in Fig. 1 gezeigten Ausführungsform sind die Verbindungsglieder 6-8 und die zugeordneten Verbindungsöffnungen 9-11 zylinderförmig ausgebildet. Alternativ können die Verbindungsglieder des ersten Teilträgers 2 und die Verbindungsöffnungen des zweiten Teilträgers 3 eine rechteckförmige oder quadratische Querschnittsfläche aufweisen. Bevorzugt werden Querschnittsflächen mit einer Symmetrie in einer axialen Richtung (Pfeil **12**) verwendet, die außerdem einfach, genau und kostengünstig herzustellen sind. Symmetrische Querschnittsflächen haben den Vorteil, dass die Kraft bzw. Spannungsverteilung gleichmäßig erfolgt. Als axiale Richtung 12 ist die Richtung definiert, in die die Verbindungsglieder 6-8 des ersten Teilträgers 2 ausgerichtet sind. Als radiale Richtung ist die zur axialen Richtung 12 senkrechte Ebene **13** definiert.

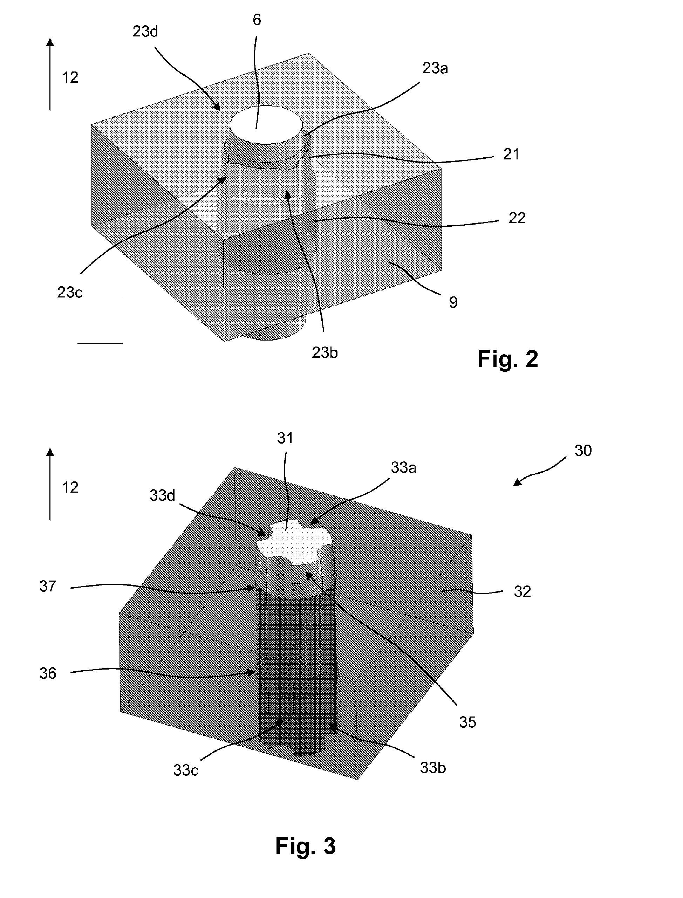

**Fig. 2** zeigt das zylinderförmige Verbindungsglied 6 des ersten Teilträgers 2 und die zugeordnete Verbindungsöffnung 9 des zweiten Teilträgers 3 des Optikträgers 1 der Fig. 1 im justierten Zustand in einer vergrößerten Darstellung. Die zylinderförmige Verbindungsöffnung 9 ist als Stufenbohrung mit einem ersten Zylinderabschnitt **21** und einem zweiten Zylinderabschnitt **22** ausgebildet. Der Durchmesser des ersten Zylinderabschnitts 21 ist so an den Durchmesser des Verbindungsgliedes 6 angepasst, dass der erste Zylinderabschnitt 21 und das Verbindungsglied 6 im verbundenen Zustand eine Spielpassung bilden. Der zweite Zylinderabschnitt 22 und das Verbindungsglied 6 sind im justierten Zustand nicht in Kontakt miteinander.

Der zweite Zylinderabschnitt 22 stellt einen in radialer Richtung 13 verlaufenden radialen Schlitz dar, der als Radialschlitz bezeichnet wird. Um die Flächenpressung zu reduzieren, können mehrere in axialer Richtung 12 angeordnete Radialschlitze im Verbindungsglied oder in der zugeordneten Verbindungsöffnung angeordnet sein, wobei die Anzahl und Breite der Radialschlitze an die auftretenden Flächenpresskräfte angepasst werden. Die Radialschlitze können in radialer Richtung über den vollen Umfang des Verbindungsgliedes bzw. der Verbindungsöffnung verlaufen oder unterbrochen ausgestaltet sein. Eine in radialer Richtung 13 entlang der Kontaktfläche symmetrische Ausgestaltung des Radialschlitzes hat den Vorteil, dass die Kraft gleichmäßig übertragen wird und die Spannungsverteilung konstant ist.

Um die zwischen dem ersten Zylinderabschnitt 21 und dem Verbindungsglied 6 auftretende Flächenpressung zu reduzieren, sind im ersten Zylinderabschnitt 21 vier in axialer Richtung 12 verlaufende schlitzförmige Aussparungen **23a-23d,** die als Axialschlitze bezeichnet werden, angeordnet. Die vier Axialschlitze 23a-23d sind symmetrisch auf den Umfang des ersten Zylinderabschnitts 21 verteilt angeordnet. Die symmetrische Anordnung der Axialschlitze 23a-23d bietet den Vorteil, dass die Kraft gleichmäßig übertragen wird und die Spannungsverteilung konstant ist.

Die Form eines Axialschlitzes ist durch die Länge in axialer Richtung 12 und die Querschnittsfläche in der zur axialen Richtung 12 senkrechten radialen Richtung 13 bestimmt. Die Querschnittsfläche des Axialschlitzes ist so ausgewählt, dass sich der Axialschlitz einfach und kostengünstig, bspw. durch Fräsen, herstellen lässt.

Fig. 2 zeigt die Kombination eines Radialschlitzes 22 mit mehreren Axialschlitzen 23a-23d, wobei der Radialschlitz 22 und die Axialschlitze 23a-23d in in axialer Richtung 12 versetzten Zylinderabschnitten 21, 22 der Verbindungsöffnung 9 angeordnet sind. Axial- und Radialschlitze können auch im gleichen Abschnitt des Verbindungsgliedes bzw. der Verbindungsöffnung angeordnet sein und sich schneiden. Außerdem können Axial- und/oder Radialschlitze mit weiteren, bspw. mit schraubenförmigen, Aussparungen kombiniert sein.

**Fig. 3** zeigt einen Ausschnitt einer weiteren Ausführungsform eines erfindungsgemäßen Optikträgers **30** mit einem zylinderförmigen Verbindungsglied **31** und einer zugeordneten zylinderförmigen Verbindungsöffnung **32** im justierten Zustand. Das zylinderförmige Verbindungsglied 31 weist vier symmetrisch auf den Umfang verteilte Schlitze **33a-33d** auf, die in axialer Richtung 12 verlaufen. Der Optikträger 30 unterscheidet sich der Ausführung gemäß Fig. 2 dadurch, dass die Aussparungen in Form der Axialschlitze 33a-33d im Verbindungsglied des ersten Teilträgers und nicht wie in Fig. 2 in der Verbindungsöffnung des zweiten Teilträgers angeordnet sind.

Die Axialschlitze 33a-33d verlaufen in axialer Richtung 12 über die gesamte Höhe des Verbindungsgliedes 31. Alternativ könnte die Höhe der Axialschlitze 33a-33d auf die Höhe der Kontaktfläche des Verbindungsgliedes 31 zu der Verbindungsöffnung 32 oder auf einen Teil der Höhe dieser Kontaktfläche begrenzt sein. Die in Fig. 3 gezeigte Ausführung mit Axialschlitzen 33a-33d, die über die gesamte Höhe des Verbindungsgliedes 31 verlaufen, ist durch Fräsen einfacher herzustellen als Axialschlitze, die nur über eine begrenzte Höhe der Verbindungsglieder verlaufen.

Um das Verbindungsglied 31 beim Zusammenbau einfacher in die Verbindungsöffnung 32 einpassen zu können, weist das Verbindungsglied 31 an einem dem Teilträger entgegen gesetzten Ende **34** einen Übergangsbereich **35** mit einem reduzierten Durchmesser auf.

Die zylinderförmige Verbindungsöffnung 32 weist an zwei gegenüber liegenden Enden einen ersten Übergangsbereich **36** und einen zweiten Übergangsbereich **37** auf. Der erste Übergangsbereich 36 führt wie der Übergangsbereich 35 des Verbindungsgliedes 31 dazu, dass das Verbindungsglied 31 leichter in die Verbindungsöffnung 32 eingepasst werden kann. Der zweite Übergangsbereich 37 der Verbindungsöffnung 32 dient dazu, das Verbindungsglied 31 dadurch in der Position zu fixieren, dass sich das Material ausdehnen kann.

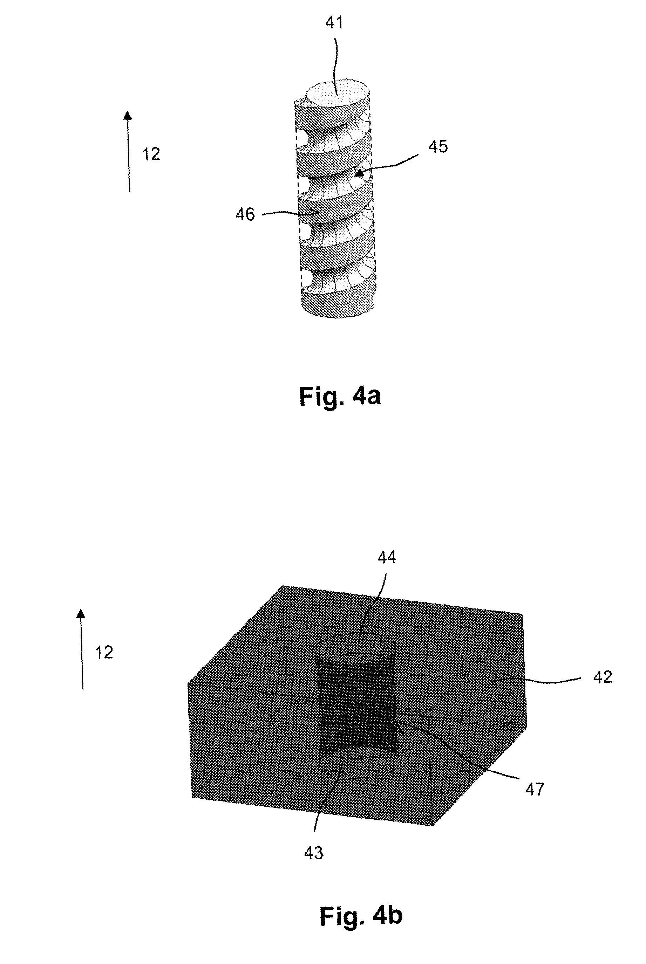

**Fign. 4a, b** zeigen eine weitere Ausführungsform eines erfindungsgemäßen Verbindungsgliedes **41** (Fig. 4a) und einer zugeordneten Verbindungsöffnung **42** (Fig. 4b) im nichtjustierten Zustand. Das Verbindungsglied 41 und die zugeordnete Verbindungsöffnung 42 sind zylinderförmig ausgebildet. Die Verbindungsöffnung 42 ist analog zu der Verbindungsöffnung 32 der Fig. 3 mit einem ersten und zweiten Übergangsbereich **43, 44** ausgebildet. In der äußeren zylinderförmigen Mantelfläche des Verbindungsgliedes 41, d.h. in der Kontaktfläche zu der Verbindungsöffnung 42, befindet sich eine schraubenförmig ausgebildete Aussparung **45.** Die verbleibende schraubenförmige Außenfläche **46** des Verbindungsgliedes 41 steht im justierten Zustand mit der zylinderförmigen Innenfläche **47** der Verbindungsöffnung 42 in Kontakt.

Die Steigung und Breite der Schraubenlinie sind so gewählt, dass die Kontaktfläche des Verbindungsgliedes 41 zu der zugeordneten Verbindungsöffnung 42 um den gewünschten Anteil reduziert wird und die Aussparung 45 andererseits einfach herzustellen ist. Die schraubenförmig ausgebildete Aussparung 45 kann mit Aussparungen, die in axialer Richtung 12 verlaufen, kombiniert werden.

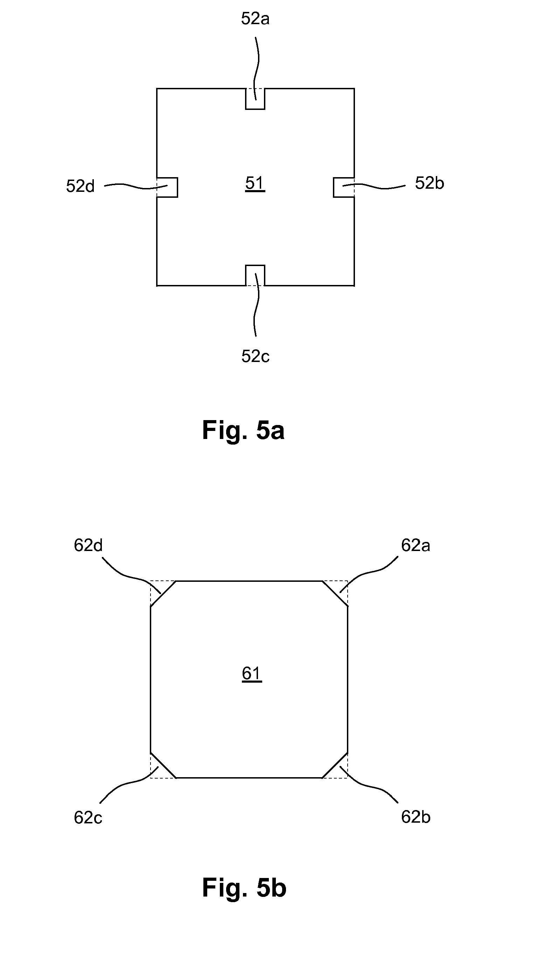

**Fign. 5a, b** zeigen weitere Ausführungsformen von erfindungsgemäßen Verbindungsgliedern **51, 61** mit einer quadratischen Querschnittsfläche mit vier axialen Schlitzen in einem Querschnitt senkrecht zur axialen Richtung 12.

Fig. 5a zeigt ein quadratisches Verbindungsglied 51 mit vier Axialschlitzen **52a-52d,** die symmetrisch auf den Umfang des Verbindungsgliedes 51 verteilt sind. Die Axialschlitze 52a-52d sind jeweils in der Mitte der vier Quadratseiten des Verbindungsgliedes 51 angeordnet und rechteckförmig ausgebildet.

Fig. 5b zeigt ein quadratisches Verbindungsglied 61 mit vier Axialschlitzen **62a-62d,** die symmetrisch auf den Umfang des Verbindungsgliedes 61 verteilt sind. Die Axialschlitze 62a-62d sind jeweils in den vier Quadratecken des Verbindungsgliedes 61 angeordnet und dreieckförmig ausgebildet.

## Patentansprüche

1. Optikträger (1) mit zumindest zwei, je ein optisches Bauelement (4, 5) fixierenden Teilträgern (2, 3), die über zumindest zwei flächig beabstandete Verbindungsglieder (6-8; 31; 41; 51; 61) miteinander verbunden sind, wobei die Verbindungsglieder (6-8; 31; 41; 51; 61) in einer axialen Richtung (12) versetzbar in passend zugeordneten Verbindungsöffnungen (9-11; 32; 42) über Kontaktflächen reibkraftschlüssig verbunden sind,
**dadurch gekennzeichnet, dass**
die Verbindungsglieder (6-8; 31; 41; 51; 61) und/oder die Verbindungsöffnungen (9-11; 32; 42) in der Kontaktfläche mindestens eine Aussparung (22, 23a-23d; 33a-33d; 44; 52a-52d; 62a-62d) aufweisen.

2. Optikträger nach Anspruch 1, **dadurch gekennzeichnet, dass** die mindestens eine Aussparung als ein in axialer Richtung (12) verlaufender Schlitz (23a-23d; 33a-33d; 52a-52d; 62a-62d) ausgebildet ist.

3. Optikträger nach Anspruch 2, **dadurch gekennzeichnet, dass** sich der mindestens eine in axialer Richtung (12) verlaufende Schlitz (33a-33d) über die gesamte Höhe des Verbindungsgliedes (31) und/oder der Verbindungsöffnung in axialer Richtung (12) erstreckt.

4. Optikträger nach einem der Ansprüche 2 bis 3, **dadurch gekennzeichnet, dass** die Verbindungsglieder (6-8; 31) und/oder die zugeordneten Verbindungsöffnungen (9-11; 32) mindestens zwei symmetrisch über den Umfang der Kontaktfläche verteilte, in axialer Richtung (12) verlaufende Schlitze (23a-23d; 33a-33d; 52a-52d; 62a-62d) aufweisen.

5. Optikträger nach einem der Ansprüche 2 bis 4, **dadurch gekennzeichnet, dass** die Verbindungsglieder (51; 61) und/oder die zugeordneten Verbindungsöffnungen bei einer rechteckigen Querschnittsfläche eine gerade Anzahl von Aussparungen (52a-52d; 62a-62d) aufweisen, die symmetrisch über den Umfang der Kontaktfläche verteilt sind.

6. Optikträger nach Anspruch 1, **dadurch gekennzeichnet, dass** die mindestens eine Aussparung (44) entlang einer Schraubenlinie verläuft.

7. Optikträger nach Anspruch 1, **dadurch gekennzeichnet, dass** die mindestens eine Aussparung als ein in einer radialen Richtung (13) verlaufender Schlitz (22) ausgebildet ist.

8. Optikträger nach einem der vorhergehenden Ansprüche, **dadurch gekennzeichnet, dass** der Teilträger (2) und die Verbindungsglieder (6-8) einteilig ausgebildet sind.

9. Optikträger nach einem der vorhergehenden Ansprüche, **dadurch gekennzeichnet, dass** die Verbindungsglieder (31) an einem dem Teilträger abgewandten Ende (34) einen Übergangsbereich (35) aufweisen.

10. Optikträger nach einem der vorhergehenden Ansprüche, **dadurch gekennzeichnet, dass** die Verbindungsöffnungen (32; 42) einen ersten Übergangsbereich (36; 43) und/oder einen zweiten Übergangsbereich (37; 44) aufweisen.
